# EUROPÄISCHE PATENTSCHRIFT

(11) **EP 3 583 744 B1**
(45) Veröffentlichungstag und Bekanntmachung des Hinweises auf die Patenterteilung: **13.01.2021**
(21) Anmeldenummer: 17721617.3
(22) Anmeldetag: 02.05.2017
(51) Int. Cl.: H04L 12/40, H04L 12/46, H04L 29/08

(54) **VERFAHREN ZUM BETREIBEN EINES AUTOMATISIERUNGSNETZWERKS, AUTOMATISIERUNGSNETZWERK UND COMPUTERPROGRAMMPRODUKT**
METHOD FOR OPERATING AN AUTOMATION NETWORK, AUTOMATION NETWORK, AND COMPUTER PROGRAM PRODUCT
PROCÉDÉ SERVANT À FAIRE FONCTIONNER UN RÉSEAU D'AUTOMATISATION, RÉSEAU D'AUTOMATISATION ET PRODUIT-PROGRAMME D'ORDINATEUR

(43) Veröffentlichungstag der Anmeldung: 25.12.2019
(73) Patentinhaber: Siemens Aktiengesellschaft, 80333 München (DE)
(72) Erfinder: BUCHSTALLER, Dominic, 88048 Friedrichshafen (DE)
(86) Internationale Anmeldenummer: PCT/EP2017/060365
(87) Internationale Veröffentlichungsnummer: WO 2018/202276

(56) Entgegenhaltungen:
- Armin Pühringer ET AL: "How "Industrial Cloud Communications" Delivers the Benefits of Internet-Connected Manufacturing How "Industrial Cloud Communications" Delivers the Benefits of Internet-Connected Manufacturing", , 1. Januar 2016 (2016-01-01), XP055384410, Gefunden im Internet: URL:https://www.hilscher.com/fileadmin/use r_upload/PDF/Hilscher__Industrial_Cloud_Co mmunications__WP_1_2016_FINAL.PDF [gefunden am 2017-06-22]
- Hilscher: "Edge Gateway NIOT-E-TIJCX-GB-RE", , 1. Oktober 2016 (2016-10-01), XP055384415, Gefunden im Internet: URL:https://www.hilscher.com/fileadmin/cms _upload/de/Resources/pdf/Edge_Gateway_NIOT -E-TIJCX-GB-RE_UM_01_EN.pdf [gefunden am 2017-06-22]
- Andy Stanford-Clark ET AL: "MQTT For Sensor Networks (MQTT-SN) Protocol Specification Version 1.2 Contents", , 14. November 2013 (2013-11-14), XP055358775, Gefunden im Internet: URL:http://mqtt.org/new/wp-content/uploads /2009/06/MQTT-SN_spec_v1.2.pdf [gefunden am 2017-06-23]

## Beschreibung

Die vorliegende Erfindung betrifft ein Verfahren zum Betreiben eines Automatisierungsnetzwerks und ein Automatisierungsnetzwerk und ein Computerprogrammprodukt.

Ein Automatisierungsnetzwerk umfasst Feldgeräte, wie Steuerungen, Umrichter und Messgeräte, und eine zentrale Steuervorrichtung, mit der die Feldgeräte herkömmlich über einen Kommunikationsbus, wie Profinet, Profibus oder Modbus, kommunizieren. Es sind cloudbasierte Datenbankeinrichtungen als zentrale Steuervorrichtungen in weiträumig verteilten Automatisierungsnetzwerke bekannt. Die Feldgeräte in einem verteilten Automatisierungsnetzwerk kommunizieren über ein jeweiliges Protokoll mit der Datenbankeinrichtung.

Daneben sind in einem verteilten Automatisierungsnetzwerk zur Koordinierung des Betriebs des Automatisierungsnetzwerks Gerätedaten über die Feldgeräte im Netzwerk und Benutzerdaten über Benutzer der Geräte im Netzwerk erforderlich. Zum Austausch von Geräte- und Benutzerdaten werden zusätzliche Protokolle wie SQL oder TCP Sockets verwendet, die für Verwaltungsaufgaben optimiert sind.

Die Verwendung unterschiedlicher Protokolle auf einer Vielzahl unterschiedlicher Einrichtungen führt zu einer hohen Systemkomplexität.

Das Weißbuch "How Industrial Cloud Communications Delivers the Benefits of Internet-Connected Manufacturing" von Armin Pühringer et. al, 1. Januar 2016, XP055384410, offenbart ein Automatisierungsnetzwerk, in dem Feldgeräteinrichtungen gemäß einem vorgegebenen MQTT-Protokoll Telemetriedaten übermitteln, während ein Edge-Gateway Verwaltungsdaten zwischen den Feldgeräteinrichtungen und Geräten in einer Cloud vermittelt. Das Handbuch "Edge Gateway NIOT-E-TIJCX-GB-RE", Hilscher Gesellschaft für Systemautomation mbH, XP 055384415, beschreibt Details des Edge-Gateways.

Das Dokumtent "MQTT for Sensor Networks (MQTT-SN) Protocol Specification", Andy Stanford-Clark und Hong Linh Truong, XP055358775, schlägt das MQTT-SN-Protokoll zur Übermittlung von Felddaten im Rahmen der Maschine-zu-Maschine-Kommunikation in einem Automatisierungsnetzwerk vor.

Vor diesem Hintergrund besteht eine Aufgabe der vorliegenden Erfindung darin, den Betrieb eines Automatisierungsnetzwerks zu verbessern.

Demgemäß wird ein Verfahren zum Betreiben eines Automatisierungsnetzwerks, das eine Gatewayeinrichtung und mehrere Netzwerkeinrichtungen umfasst, vorgeschlagen. Bei dem Verfahren erfolgt von den Netzwerkeinrichtungen ein Abonnieren von Abonnementdaten mit einer jeweiligen zugeordneten Abonnementkennung und ein Publizieren von Publikationsdaten unter einer jeweiligen zugeordneten Publikationskennung bei der Gatewayeinrichtung. Dabei erfolgt das Publizieren der Publikationsdaten als abonnierte Abonnementdaten unter einer jeweiligen Abonnementkennung, die der jeweiligen Publikationskennung der Publikationsdaten entspricht, durch die Gatewayeinrichtung derart, dass allen Netzwerkeinrichtungen, welche Abonnementdaten mit derselben Abonnementkennung wie die jeweilige Publikationskennung abonnieren, die abonnierten Abonnementdaten mit der Abonnementkennung übermittelt werden. Die Netzwerkeinrichtungen umfassen eine Feldgeräteinrichtung, welche Mess- und/oder Steuerdaten abonniert, erfasst und/oder publiziert, und eine Datenbankeinrichtung, welche die Mess- und/oder Steuerdaten der Feldgeräteinrichtung, Gerätedaten über in dem Automatisierungsnetzwerk vorliegende Netzwerkeinrichtungen und Benutzerdaten über Benutzer der Netzwerkeinrichtungen abonniert, speichert, bereitstellt und/oder publiziert. Dabei erfolgt das Übermitteln von Daten, insbesondere das Übermitteln der Mess- und/oder Steuerdaten, der Gerätedaten und der Benutzerdaten, zwischen den Netzwerkeinrichtungen nach einem einzigen vorgegebenen Protokoll. In Ausführungsformen erfolgt das Übermitteln der Mess- und/oder Steuerdaten, der Gerätedaten und der Benutzerdaten ausschließlich durch Abonnieren und Publizieren über die Gatewayeinrichtung.

Das Automatisierungsnetzwerk umfasst somit eine Datenbankeinrichtung, eine Gatewayeinrichtung, Feldgeräteinrichtungen und kann weitere zum Betrieb des Automatisierungsnetzwerks erforderliche Netzwerkeinrichtungen, wie eine Steuereinrichtung und eine Bedieneinrichtung, umfassen.

Die Datenbankeinrichtung kann eine Messwertdatenbank, eine Benutzerdatenbank und/oder eine Gerätedatenbank in einer Cloud umfassen. Weiterhin kann die Datenbankeinrichtung eine zentrale Steuereinheit zum Steuern des Betriebs des Automatisierungsnetzwerks umfassen.

Eine Feldgeräteinrichtung ist insbesondere eine vernetzte Einrichtung zum Durchführen von Mess- und/oder Automatisierungsaufgaben, insbesondere ein IoT-Knoten, ein Embedded-Gerät oder eine Sensor- und/oder Aktoreinrichtung, die kommunikativ mit einer Verbindungsstrecke wie einem Netzwerk, einem Bus usw. drahtlos oder drahtgebunden koppelbar ist. Insbesondere kann die Feldgeräteinrichtung mindestens einen Sensor zum Messen oder Erfassen von Messdaten und eine Kommunikationseinheit zum Übertragen von Messdaten als Publikationsdaten an die Gatewayeinrichtung aufweisen. Weiterhin kann die Feldgeräteinrichtung mindestens einen Aktor zum Durchführen einer Automatisierungsaufgabe aufweisen.

Alle Netzwerkeinrichtungen des Automatisierungsnetzwerks übermitteln vorzugsweise Daten ausschließlich mit dem vorgegebenen Protokoll, welches das Abonnieren und Publizieren von Daten über die Gatewayeinrichtung vorsieht. Insbesondere kann eine jeweilige Netzwerkeinrichtungen jeweilige Publikationsdaten unter einer jeweiligen Publikationskennung publizieren, ohne dass sie die abonnierenden Netzwerkeinrichtungen oder die Anzahl oder Netzwerkadressen der abonnierenden Netzwerkeinrichtungen kennt.

Unter Abonnieren ist insbesondere zu verstehen, dass eine Netzwerkeinrichtung durch Übermitteln einer Abonnementanfrage, die eine Abonnementskennung umfasst, der Gatewayeinrichtung anzeigt, dass sie Abonnementdaten empfangen möchte, denen die Abonnementskennung zugeordnet ist. Solange die Netzwerkeinrichtung die Abonnementdaten mit der Abonnementkennung abonniert, bezieht sie Abonnementdaten mit der Abonnementskennung immer dann, wenn bei der Gatewayeinrichtung entsprechende Abonnementdaten vorliegen. Das Abonnieren kann durch Übermitteln einer Kündigungsanfrage beendet werden.

Unter Publizieren ist insbesondere zu verstehen, dass eine Netzwerkeinrichtung Daten als Publikationsdaten mit einer Publikationskennung an die Gatewayeinrichtung übermittelt. Die Netzwerkeinrichtung verfügt dabei beispielsweise nicht über Kenntnis der Netzwerkeinrichtungen als tatsächlichen Empfängern der Publikationsdaten im Automatisierungsnetzwerk, die Netzwerkadressen oder die Anzahl der tatsächlichen Empfänger. Die Gatewayeinrichtung ermittelt Netzwerkeinrichtungen, die zuvor eine Abonnementanfrage für eine Abonnementkennung an die Gatewayeinrichtung übermittelt haben, die der Publikationskennung entspricht, und übermittelt die Publikationsdaten an alle ermittelten Netzwerkeinrichtungen als Abonnementdaten mit der Abonnementkennung.

Die Publikationsdaten und die Abonnementdaten können jeweils eine Kennung und ein Nutzdatenfeld umfassen. Das Nutzdatenfeld, auch als Payload bezeichnet, kann die Mess- und/oder Steuerdaten, Gerätedaten, Benutzerdaten und/oder Verwaltungsanweisungen umfassen. Bei einer Kennung handelt es sich um die jeweilige Publikations- bzw. Abonnementkennung, wie eine Messdaten-Kennung, Steuerdaten-Kennung, Gerätedaten-Kennung, Benutzerdaten-Kennung und/oder Verwaltungskennung.

Insofern kann man das Publizieren von jeweiligen Daten als Publikationsdaten unter einer jeweiligen Publikationskennung bei der Gatewayeinrichtung derart verstehen, dass Publikationsdaten erzeugt werden, die als Payload die jeweiligen Daten umfassen und ferner die jeweilige Publikationskennung umfassen, und die Publikationsdaten an die Gatewayeinrichtung übermittelt werden.

Unter dem Abonnieren von jeweiligen Daten als Abonnementdaten unter einer jeweiligen Abonnementkennung bei der Gatewayeinrichtung ist insbesondere zu verstehen, dass, nachdem eine entsprechende Abonnementanfrage an die Gatewayeinrichtung übermittelt wurde, Abonnementdaten empfangen werden, die als Payload die jeweiligen Daten umfassen und ferner die jeweilige Abonnementkennung umfassen.

In den Gerätedaten, die in der Datenbankeinrichtung gespeichert sind, kann insbesondere hinterlegt sein, welche Netzwerkeinrichtungen im Netzwerk vorhanden sind und welche Netzwerkeinrichtung Daten mit welcher Kennung abonniert und/oder publiziert. Daneben sind weitere Gerätedaten wie Konfigurationsdaten oder Kennlinien für eine jeweilige Feldgeräteinrichtung und/oder einen Sensor oder Aktor der jeweiligen Feldgeräteinrichtungen denkbar.

Konfigurationsdaten können jegliche Daten sein, die den Betrieb der Feldgeräteinrichtung beeinflussen, wie beispielsweise Einschalt- und Ausschaltzeiten oder Angaben zur Häufigkeit des Erfassens und Übertragens von Messdaten.

Eine Kennlinie kann beispielsweise eine Datenreihe sein, in welcher mögliche Eingangsgrößen oder Messgrößen, wie einer piezoelektrischen Spannung, eines Sensors entsprechenden Ausgangsgrößen, wie einem Druck oder einer Auslenkung, zugeordnet sind.

In den Benutzerdaten, die in der Datenbankeinrichtung gespeichert sind, können insbesondere Anmeldedaten, wie Benutzernamen und Kennwörter, und Autorisierungsdaten hinterlegt sein, die festlegen, welche Benutzer auf welche Abschnitte, zum Beispiel eine bestimmte Auswahl von Netzwerkeinrichtungen und/oder eine bestimmte Auswahl von in der Datenbankeinrichtung gespeicherten Daten, des Automatisierungsnetzwerks zugreifen dürfen.

Durch das Abonnieren und Publizieren mit dem einzigen vorgegebenen Protokoll können Daten effizient mit geringer Bandbreite, geringen Ressourcenbedarf und mit wenig Konfigurationsaufwand auch über nur eingeschränkt zuverlässige und weiträumig verteilte Netzwerke zwischen einer großen Anzahl von Netzwerkeinrichtungen übermittelt werden.

Auch die Gerätedaten und die Benutzerdaten sowie Verwaltungsanweisungen werden in Ausführungsformen des Verfahrens ausschließlich gemäß demselben einzigen vorgegebenen Protokoll durch Abonnieren und Publizieren über die Gatewayeinrichtung übermittelt wie die Mess- und Steuerdaten. Feldgeräteinrichtungen unterstützen vorzugsweise ausschließlich das vorgegebene Protokoll. Dadurch lassen sich entsprechende Feldgeräteeinrichtungen ressourcengünstig implementieren, weil nur ein Kommunikationsprotokoll nötig ist. Somit wird den Feldgeräteinrichtungen der Zugriff auf Benutzerdaten und Gerätedaten des Automatisierungsnetzwerks über das vorgegebene Protokoll ermöglicht.

Es entfällt die Notwendigkeit, andere komplexe Protokolle auf den Netzwerkeinrichtungen, wie der Datenbankeinrichtung und der Gatewayeinrichtung, des Automatisierungsnetzwerks zu unterstützen. Diese Einrichtungen können eine sehr große Anzahl Feldgeräteinrichtungen verwalten, so dass eine sparsame Verwendung von Ressourcen, wie Bandbreite und Rechenzeit, ermöglicht wird. Weiterhin verringert sich der Administrationsaufwand für die Pflege, Wartung, Fehlersuche und -behebung, wenn im gesamten Automatisierungsnetzwerk ausschließlich das eine vorgegebene Protokoll eingesetzt wird.

Zudem vereinfacht sich die Datenmodellierung, wenn sämtliche Daten im Automatisierungsnetzwerk mit demselben vorgegebenen Protokoll transportiert werden.

Gemäß einer Ausführungsform ist das vorgegebene Protokoll das Message-Queue-Telemetry-Transport-(MQTT)-Protokoll. Hierbei ist eine jeweilige Abonnementkennung und eine jeweilige Publikationskennung jeweils ein jeweiliges MQTT-Topic, und die Gatewayeinrichtung implementiert einen MQTT-Broker.

MQTT ist ein Beispiel für ein vorgegebenes Protokoll, das das Publizieren und Abonnieren von Daten wie Messdaten auf zuverlässige und ressourcen- und datensparsame Weise erlaubt und konventionell nur auf den Austausch von Felddaten, Messdaten und Telemetriedaten optimiert ist.

Gemäß einer weiteren Ausführungsform erfolgt ein Übertragen bei einem jeweiligen Abonnieren und/oder Publizieren über eine jeweilige TCP-Verbindungsstrecke, und das vorgegebene Protokoll ist das MQTT-Protokoll. Ein Übertragen bei einem jeweiligen Abonnieren und/oder Publizieren kann ferner über eine jeweilige UDP-, ZigBee- oder TinyOS-Verbindungsstrecke erfolgen, wobei das vorgegebene Protokoll das MQTT-SN-Protokoll ist.

MQTT-SN ist eine Weiterentwicklung von MQTT, die Verbindungsstrecken ermöglicht, welche nicht auf TCP/IP basieren. Das Verfahren kann besonders günstig in weiträumig verteilten, heterogenen Netzwerken mit unterschiedlichen Arten von Verbindungsstrecken durchgeführt werden.

Gemäß einer weiteren Ausführungsform werden Datenübertragungen zwischen den Netzwerkeinrichtungen des Automatisierungsnetzwerks und/oder Anfragen an die Gatewayeinrichtung, die nicht dem vorgegebenen Protokoll entsprechen, deaktiviert und/oder blockiert.

Unter einer Anfrage ist insbesondere das Senden einer Nachricht an die Gatewayeinrichtung zu verstehen.

Das Deaktivieren kann durch Weglassen entsprechender Programmproduktkomponenten auf den entsprechenden Netzwerkeinrichtungen und/oder der Gatewayeinrichtung erfolgen, das Blockieren durch das Schließen entsprechender Ports und/oder durch Zwischenschalten einer Firewall. So kann die Robustheit und die Sicherheit des Automatisierungsnetzwerks erhöht werden.

Gemäß einer weiteren Ausführungsform erfassen eine oder mehrere Feldgeräteinrichtungen Messdaten und publizieren die Messdaten als Publikationsdaten mit einer oder mehreren Messdaten-Kennungen als Publikationskennung. Die Datenbankeinrichtung abonniert als Abonnementdaten die Messdaten mit der einen oder den mehreren Messdaten-Kennungen als Abonnementkennung. Die Datenbankeinrichtung generiert Steuerdaten für die eine oder mehreren Feldgeräteinrichtungen und/oder für eine oder mehrere weitere Feldgeräteinrichtungen in Abhängigkeit von den abonnierten Messdaten und/oder von den in der Datenbankeinrichtung gespeicherten Gerätedaten und publiziert die generierten Steuerdaten als Publikationsdaten mit einer Steuerdaten-Kennung als Publikationskennung. Die eine oder mehreren Feldgeräteinrichtungen und/oder die eine oder mehreren weiteren Feldgeräteinrichtungen abonnieren als Abonnementdaten die Steuerdaten mit der Steuerdaten-Kennung als Abonnementkennung und führen in Abhängigkeit von den abonnierten Steuerdaten eine Automatisierungsaufgabe durch.

Messdaten sind Daten, die beispielsweise mit einem Sensor oder einer anderen Messeinrichtung der Feldgeräteinrichtung erfasst werden, wie beispielsweise eine Temperatur, ein Druck, eine Windstärke, ein Schallpegel, eine Strahlungsintensität, eine Spannung, eine Stromstärke, eine Phasenlage usw., wie auch umfangreichere Messdaten wie etwa ein Bild, eine Bildsequenz oder ein Audiosample. Insbesondere liegen die Messdaten in digitaler Form vor.

Die Steuerdaten umfassen beispielsweise einen Sollwert, einen Steuerbefehl und/oder einen Steuerparameter für einen Aktor eines jeweiligen Feldgeräts.

Eine Automatisierungsaufgabe ist beispielsweise das Betätigen eines Aktors, Stellglieds oder Motors.

In der insbesondere cloudbasierten Datenbankeinrichtung können unter Verwendung des vorgegebenen Protokolls Messdaten von weiträumig verteilten Feldeinrichtungen zusammengeführt, ausgewertet und zum Bestimmen von Steuerdaten für dieselben oder für andere Feldeinrichtungen benutzt werden. Dabei können auch in den Gerätedaten hinterlegte Informationen berücksichtigt werden. Die Verwendung des vorgegebenen Protokolls sorgt dabei für einen schlanken und effizienten Betrieb des Automatisierungsnetzwerks.

Gemäß einer weiteren Ausführungsform umfassen die Netzwerkeinrichtungen ferner eine Bedieneinrichtung, welche abonnierte Daten anzeigt und/oder Verwaltungsanweisungen erfasst und publiziert.

Bei den abonnierten Daten kann es sich um jegliche Daten handeln, die in dem Automatisierungsnetzwerk publiziert werden, insbesondere um Messdaten, um Gerätedaten oder um Benutzerdaten.

Die Verwaltungsanweisungen sind Anweisungen eines Bedieners, welche die Datenbankeinrichtung dazu veranlassen, in der Datenbankeinrichtung gespeicherte Daten zu verändern. Eine Verwaltungsanweisung umfasst insbesondere Verwaltungsdaten, wie beispielsweise eine Anweisung zum Hinzufügen von Daten über einen Benutzer zu den Benutzerdaten, eine Anweisung zum Löschen von Daten über einen Benutzer aus den Benutzerdaten, zum Ändern von Daten über einen Benutzer, wie etwa zum Ändern eines Passworts, in den Benutzerdaten, zum Hinzufügen einer Netzwerkeinrichtung wie beispielsweise einer Feldgeräteinrichtung zu den Gerätedaten, zum Löschen einer Netzwerkeinrichtung aus den Gerätedaten oder zum Ändern von Konfigurationsparametern einer Netzwerkeinrichtung in den Gerätedaten, und/oder eine Autorisierungsanfrage. Die Verwaltungsanweisungen werden zum Beispiel durch Eintippen, Berühren eines Displays, Betätigen von Bedienelementen, Spracheingabe oder eine andere Bedienerinteraktion von dem Bediener erfasst.

Die Bedieneinrichtung kommuniziert als eine der Netzwerkeinrichtungen gemäß dem vorgeschlagenen Verfahren ebenfalls gemäß dem vorgegebenen Protokoll mit der Datenbankeinrichtung und gegebenenfalls mit weiteren Netzwerkeinrichtungen des Automatisierungsnetzwerks. Somit entfällt die Notwendigkeit, auf der Gatewayeinrichtung, der Datenbankeinrichtung und den weiteren Netzwerkeinrichtungen ein separates Protokoll für die Interaktion mit einem Bediener und die Übermittlung von Verwaltungsanweisungen des Bedieners zu implementieren. Dadurch sinkt die Systemkomplexität. Außerdem kann die Bedieneinrichtung, die insbesondere eine mobile Einrichtung mit eingeschränkten Ressourcen, wie eingeschränkter Rechenleistung, eingeschränkten Stromreserven und eingeschränktem Speicherplatz, sein kann, von dem ressourcenschonenden vorgegebenen Protokoll wie beispielsweise MQTT profitieren.

Gemäß Ausführungsformen ist die Bedieneinrichtung ein Tablet oder Tabletcomputer, ein Smartphone, ein tragbarer Computer oder ein stationärer Computer. Dabei kann von der Bedieneinrichtung jeweils ein Programm, eine App und oder ein Webbrowser ausgeführt werden, um die Funktionalität der Bedieneinrichtung zu implementieren.

Gemäß einer weiteren Ausführungsform erfasst die Feldgeräteinrichtung Messdaten und publiziert diese als Publikationsdaten mit einer Messdaten-Kennung als Publikationskennung, die Bedieneinrichtung abonniert Messdaten als Abonnementdaten mit der Messdaten-Kennung als Abonnementkennung, und die Bedieneinrichtung zeigt die abonnierten Messdaten an. In anderen Ausführungsformen publiziert die Datenbankeinrichtung Gerätedaten mit einer Gerätedaten-Kennung als Publikationskennung und/oder Benutzerdaten mit einer Benutzerdaten-Kennung als Publikationskennung, die Bedieneinrichtung abonniert als Abonnementdaten die Gerätedaten mit der Gerätedaten-Kennung als Abonnementkennung und/oder die Benutzerdaten mit der Benutzerdaten-Kennung als Abonnementkennung, und die Bedieneinrichtung zeigt die abonnierten Gerätedaten und/oder die abonnierten Benutzerdaten an.

Somit kann die Bedieneinrichtung, indem sie direkt mit dem vorgegebenen Protokoll mit den Feldgeräteinrichtungen kommuniziert, Messdaten, die von den Feldgeräteinrichtungen publiziert werden, "live" anzeigen. Außerdem kann sie eine Systemkonfiguration, wie in der Datenbankeinrichtung gespeicherte Gerätedaten und Benutzerdaten, anzeigen, die die Datenbankeinrichtung gemäß dem vorgegebenen Protokoll publiziert, ohne dass die Bedieneinrichtung ein zusätzliches Protokoll unterstützen muss.

Gemäß einer Ausführungsform erfasst die Bedieneinrichtung die Verwaltungsanweisungen eines Bedieners, welche die Datenbankeinrichtung dazu veranlassen, die in der Datenbankeinrichtung gespeicherten Daten zu verändern. Die Bedieneinrichtung publiziert die Verwaltungsanweisungen mit einer Verwaltungskennung als Publikationskennung. Die Datenbankeinrichtung abonniert die Verwaltungsanweisungen mit der Verwaltungskennung als Abonnementkennung und passt die in der Datenbankeinrichtung gespeicherten Gerätedaten und/oder Benutzerdaten anhand der abonnierten Verwaltungsanweisungen an.

Somit ermöglicht die Bedieneinrichtung einem Bediener das Verändern der in der Datenbankeinrichtung gespeicherten Gerätedaten und Benutzerdaten. Ein Bediener kann somit mit der Bedieneinrichtung das Automatisierungsnetzwerk bedienen, wobei alle Daten und Anweisungen gemäß dem vorgegebenen Protokoll durch Publizieren und Abonnieren übermittelt werden. Die Netzwerkeinrichtungen und die Gatewayeinrichtung müssen keine gesonderten Protokolle zur Anbindung der Bedieneinrichtung implementieren, und demgemäß sinkt die Systemkomplexität.

Bei dem Verändern der Gerätedaten und/oder Benutzerdaten kann es sich um ein Hinzufügen - auch als Eintragen oder Registrieren bezeichnet -, ein Löschen oder ein Bearbeiten von Datenüber eine Geräts bzw. eine Netzwerkeinrichtung oder einen Benutzer in den Gerätedaten bzw. den Benutzerdaten handeln.

Gemäß einer weiteren Ausführungsform werden zum Publizieren vorgesehene Daten durch eine jeweilige Netzwerkeinrichtung in Publikationsdaten in ein Datenformat des vorgegebenen Protokolls codiert. Abonnierte Abonnementdaten werden in dem Datenformat des vorgegebenen Protokolls von einer jeweiligen abonnierenden Netzwerkeinrichtung empfangen und decodiert.

Ein Datenformat ist eine Spezifikation der Struktur der mit dem vorgegebenen Protokoll publizierbaren Daten. Denkbar ist zum Beispiel ein JSON- oder XML-Datenformat mit einer vorgegebenen maximalen Länge.

Wenn MQTT als das vorgegebene Protokoll gewählt ist, so das MQTT-Protokoll, weil es für einfache Payloads aus einzelnen Messdaten, wie Sensormesswerten, ausgelegt ist, nur wenig Ressourcen, wie Rechenkapazität und Bandbreite. Um nun beispielsweise binäre Bilddaten einer Kamera oder eines Bildgebers, die eine Vielzahl einzelner Bildpunktdaten umfassen, sowie Verwaltungsanweisungen, Gerätedaten und Benutzerdaten ebenfalls über das vorgegebene Protokoll zu publizieren und zu abonnieren, werden diese Daten gegebenenfalls zunächst in ein mit dem Protokoll kompatibles einfaches Format codiert werden. Das Codieren kann z.B. eine Base64-Codierung von Binärdaten oder ein Komprimieren der Daten umfassen. Weiterhin kann das Codieren ein Verschlüsseln umfassen, um die Datensicherheit zu erhöhen.

Gemäß einer weiteren Ausführungsform umfasst das Codieren der zum Publizieren vorgesehenen Daten in ein Datenformat des vorgegebenen Protokolls ein Aufteilen der zum Publizieren vorgesehen Daten auf mehrere Rahmen, wie mehrere MQTT-Rahmen.

Ein Rahmen ist ein Nutzdatenabschnitt bzw. eine Payload von Publikationsdaten bzw. Abonnementdaten, die bei einem Publizieren und Abonnieren gemäß dem Protokoll wie MQTT die zu publizierenden bzw. abonnierenden Daten enthalten kann.

Wenn MQTT als das vorgegebene Protokoll benutzt wird, kann eine Einschränkung in Bezug auf die maximale Länge einer in einer einzelnen MQTT- Übermittlung transportierbaren Payload bestehen. Diese maximale Länge einer Payload beträgt bei einigen MQTT-Implementierungen beispielsweise 4096 Byte. Die in dem Automatisierungsnetz ausgetauschten Daten können diese Länge überschreiten. Beispielsweise wäre denkbar, dass als Messdaten Bild- oder Videodaten einer Feldgeräteinrichtung mit einer Kamera erfasst und gemäß MQTT publiziert und abonniert werden. Solche Daten können beim Codieren in mehrere MQTT-Rahmen oder Payloads aufgeteilt werden, die nacheinander in separaten MQTT-Übermittlungen publiziert und übermittelt werden. Die einzelnen Payloads können zusätzlich mit einer laufenden Nummer versehen werden, die beim Decodieren auf Empfängerseite ein Zusammensetzen der aufgeteilten Daten aus den Payloads der abonnierten Abonnementdaten in der ursprünglichen Reihenfolge ermöglicht.

Gemäß einem weiteren Aspekt wird ein Automatisierungsnetzwerk vorgeschlagen, das eine Gatewayeinrichtung und mehrere Netzwerkeinrichtungen umfasst. Die Netzwerkeinrichtungen sind jeweils zum Abonnieren von Abonnementdaten mit einer jeweiligen zugeordneten Abonnementkennung und zum Publizieren von Publikationsdaten unter einer jeweiligen zugeordneten Publikationskennung bei der Gatewayeinrichtung eingerichtet. Die Gatewayeinrichtung ist dabei eingerichtet zum Publizieren der Publikationsdaten als abonnierte Abonnementdaten unter einer jeweiligen Abonnementkennung, die der jeweiligen Publikationskennung der Publikationsdaten entspricht, derart, dass allen Netzwerkeinrichtungen, welche Abonnementdaten mit derselben Abonnementkennung wie die jeweilige Publikationskennung abonnieren, die abonnierten Abonnementdaten mit der Abonnementkennung übermittelt werden. Die Netzwerkeinrichtungen umfassen: eine Feldgeräteinrichtung, welche zum Abonnieren, Erfassen und/oder Publizieren von Mess- und/oder Steuerdaten eingerichtet ist, und eine Datenbankeinrichtung, welche zum Abonnieren, Speichern, Bereitstellen und/oder Publizieren der Mess- und/oder Steuerdaten der Feldgeräteinrichtung, von Gerätedaten über in dem Automatisierungsnetzwerk vorliegende Netzwerkeinrichtungen und von Benutzerdaten über Benutzer der Netzwerkeinrichtungen eingerichtet ist. Dabei sind die jeweiligen Netzwerkeinrichtungen jeweils zum Übermitteln von Daten an und von andere Netzwerkeinrichtungen nach einem einzigen vorgegebenen Protokoll eingerichtet. Insbesondere erfolgt das Übermitteln von Daten nur durch Abonnieren und Publizieren über die Gatewayeinrichtung.

Gemäß einer Ausführungsform ist das vorgeschlagene Automatisierungsnetzwerk zum Durchführen des vorgeschlagenen Verfahrens eingerichtet. Die für das vorgeschlagene Verfahren beschriebenen Ausführungsformen und Merkmale gelten für das vorgeschlagene Automatisierungsnetzwerk entsprechend.

Die Datenbankeinrichtung, die Gatewayeinrichtung und eine jeweilige Netzwerkeinrichtung können jeweils als programmgesteuerte Einrichtung ausgebildet sein. Eine jeweilige programmgesteuerte Einrichtung kann eine oder mehrere Einheiten umfassen, wobei eine jeweilige Einheit, zum Beispiel Recheneinheit oder Steuerungseinheit, hardwaretechnisch und/oder auch softwaretechnisch implementiert sein kann. Bei einer hardwaretechnischen Implementierung kann die jeweilige Einheit als Vorrichtung oder als Teil einer Vorrichtung, zum Beispiel als Computer, als Mikroprozessor, als eingebettete Steuervorrichtung oder als IoT-Knoten ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer jeweiligen Einheit die Durchführung des wie oben erläuterten Verfahrens veranlasst.

Ein Computerprogramm, wie z.B. ein Computerprogramm-Mittel, kann jeweils beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammproduktteil oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Darstellung von einem Automatisierungsnetzwerk und dessen Betrieb gemäß einem ersten Ausführungsbeispiel.
Fig. 2 zeigt eine schematische Darstellung von einem Automatisierungsnetzwerk und dessen Betrieb gemäß einem zweiten Ausführungsbeispiel.
Fig. 3 veranschaulicht das Hinzufügen weiterer Netzwerkeinrichtungen zu dem Automatisierungsnetzwerk gemäß dem zweiten Ausführungsbeispiel.

In den Figuren sind gleiche oder funktionsgleiche Elemente mit denselben Bezugszeichen versehen worden, sofern nichts anderes angegeben ist.

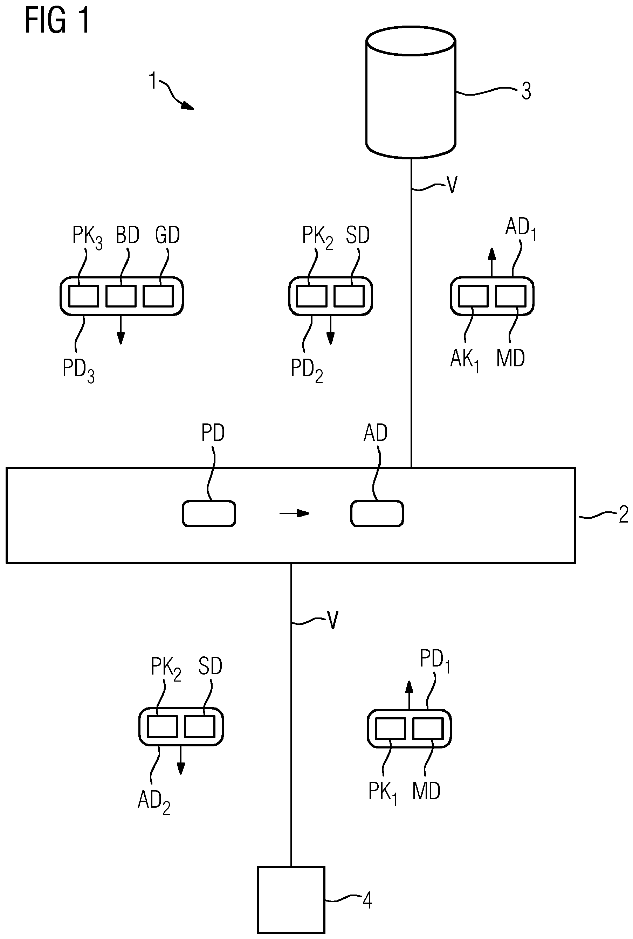

In einem ersten Ausführungsbeispiel, das in Fig. 1 gezeigt ist, weist ein Automatisierungsnetzwerk 1 eine Gatewayeinrichtung 2, eine Datenbankeinrichtung 3 und eine Netzwerkeinrichtung 4 auf. Bei der Netzwerkeinrichtung 4 handelt es sich um eine Feldgeräteinrichtung. Die Feldgeräteinrichtung 4, die Gatewayeinrichtung 2 und die Datenbankeinrichtung 3 sind über eine durch einen durchgezogenen Strich angedeutete Verbindungsstrecke V kommunikativ miteinander verbunden.

Im Folgenden wird der Betrieb des Automatisierungsnetzwerks 1 beschrieben. Insofern ist ein entsprechendes Betriebsverfahren durch die dargestellte Gatewayeinrichtung 2 und die dargestellten Netzwerkeinrichtungen 3, 4 implementiert, die die entsprechenden Verfahrensschritte implementieren.

Die Feldgeräteinrichtung 4 erfasst Messdaten MD und publiziert diese unter einer ersten Publikationskennung PK₁, die beispielsweise "/fieldData" lautet, als erste Publikationsdaten PD₁ bei der Gatewayeinrichtung 2. Hierfür sendet die Feldgeräteinrichtung 4 eine MQTT "PUBLISH"-Nachricht (ein Beispiel für die Publikationsdaten PD₁) mit der Publikationskennung "/fieldData" und den Messdaten MD als Payload an die Gatewayeinrichtung 2.

Die Datenbankeinrichtung 3 abonniert Abonnementdaten AD₁ mit der Abonnementskennung AK₁, die ebenfalls "/fieldData" lautet. Das heißt, die Datenbankeinrichtung 3 hat zuvor eine Abonnementanfrage für Abonnementdaten AD₁ mit der Abonnementkennung AK₁ "/fieldData" als Abonnementanfrage an die Gatewayeinrichtung 2 übermittelt. Die Abonnementanfrage ist in diesem Beispiel eine MQTT "SUBSCRIBE"-Nachricht, in der das MQTT-Topic "/fieldData" spezifiziert ist. Daher ist die Datenbankeinrichtung 3 der Gatewayeinrichtung 2 als Abonnentin von Abonnementdaten AD₁ mit der Kennung AK₁ "/fieldData" bekannt. Somit übermittelt die Gatewayeinrichtung 2 die Messdaten MD aus den von der Feldgeräteinrichtung 4 publizierten Publikationsdaten PD₁ mit der Publikationskennung PK₁ "/fieldData" als Abonnementdaten AD₁ mit der Abonnementkennung AK₁ "/fieldData" an die Datenbankeinrichtung 3. Hierfür sendet die Gatewayeinrichtung eine MQTT "PUBLISH"-Nachricht (ein Beispiel für die Abonnementdaten AD₁) mit der Abonnementkennung "/fieldData" und den Messdaten MD als Payload an die Datenbankeinrichtung 3. Auf diese Weise erhält die Datenbankeinrichtung 3 die Messdaten MD, ohne dass die Netzwerkeinrichtung 4 notwendigerweise Kenntnis von der Existenz, einer Netzwerkadresse usw. der Datenbankeinrichtung 3 hat.

Die Gatewayeinrichtung 2 überführt somit die von ihr empfangenen publizierten Publikationsdaten PD in an abonnierende Netzwerkeinrichtungen 3, 4 zu übermittelnde Abonnementdaten AD, was in Fig. 1 im Inneren des die Gatewayeinrichtung 2 darstellenden Kastens schematisch angedeutet ist.

Weiterhin publiziert die Datenbankeinrichtung 3 unter der Publikationskennung PK₂ "/controlData" Steuerdaten SD, wie zum Beispiel einen Sollwert für die Feldgeräteinrichtung 4. Die Feldgeräteinrichtung 4 hat zuvor eine Abonnementanfrage für Abonnementdaten AD₂ mit der Abonnementkennung AK₂ "/controlData" als Abonnementanfrage an die Gatewayeinrichtung 2 übermittelt. Daher ist die Feldgeräteinrichtung 4 der Gatewayeinrichtung 2 als Abonnentin von Abonnementdaten AD₂ mit der Abonnementkennung AK₂ "/controlData" bekannt. Somit übermittelt die Gatewayeinrichtung 2 die Steuerdaten SD aus den von der Datenbankeinrichtung 3 publizierten Publikationsdaten PD₂ mit der Publikationskennung PK₂ "/controlData" als Abonnementdaten AD₂ mit der Abonnementkennung AK₂ "/controlData" an die Feldgeräteinrichtung 4. Das Abonnieren und Publizieren erfolgt mittels MQTT-Nachrichten auf gleiche Weise wie vorstehend beschrieben.

Zudem publiziert die Datenbankeinrichtung 3 unter der Publikationskennung PK₃ "/managementData" Gerätedaten GD und Benutzerdaten BD als Publikationsdaten PD₃. Diese sind für die Feldgeräteinrichtung 4 im vorliegenden Ausführungsbeispiel ohne Bedeutung, daher abonniert die Feldgeräteinrichtung 4 Abonnementdaten mit der Abonnementkennung "/managementData" nicht. Weitere in der Figur 1 nicht gezeigte Netzwerkeinrichtungen können diese Daten jedoch abonnieren und dafür dasselbe vorgegebene MQTT-Protokoll und dieselbe Gatewayeinrichtung 2 nutzen, über die auch die Messdaten MD und die Steuerdaten SD abonniert und publiziert werden.

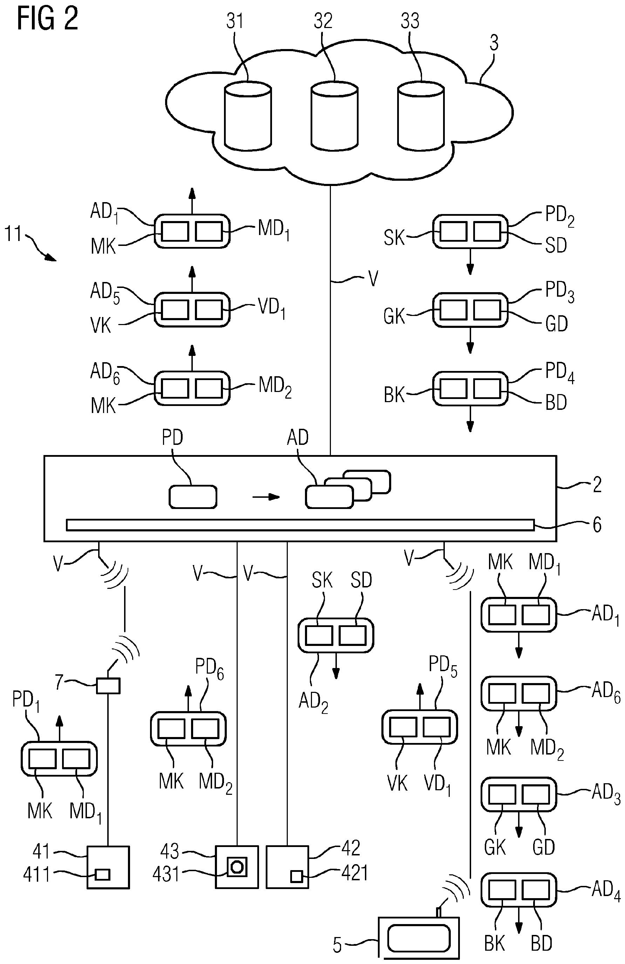

Dies wird nun anhand des zweiten Ausführungsbeispiels näher beschreiben, das in Fig. 2 gezeigt ist.

In Fig. 2 weist ein Automatisierungsnetzwerk 11 mehrere Feldgeräteinrichtungen 41, 42, 43, eine Datenbankeinrichtung 3 und eine Bedieneinrichtung 5 auf. Die ersten Feldgeräteinrichtung 41 ist ein Feldgerät mit einem Sensor 411, die zweite Feldgeräteinrichtung 42 ist ein Feldgerät mit einem Aktor 421, und die dritte Feldgeräteinrichtung 43 ist ein Feldgerät mit einem Bildgeber 431. Die Datenbankeinrichtung 3 ist als Cloud implementiert und umfasst eine Messwertdatenbank 31, eine Gerätedatenbank 32 und um eine Benutzerdatenbank 33. Bei der Bedieneinrichtung handelt es sich um einen Tabletcomputer 5.

Die Gatewayeinrichtung 2 umfasst eine Firewall 6, die Anfragen und/oder Datenübertragungen, die nicht dem MQTT-Protokoll entsprechen, blockiert. Daher ist eine Datenübertragung zwischen den Feldgeräten 41, 42, 43, der Datenbankeinrichtung 3 und der Bedieneinrichtung 5 ausschließlich gemäß dem vorgegebenen MQTT-Protokoll über die Gatewayeinrichtung 2 möglich.

Die cloudbasierte Datenbankeinrichtung 3, die Feldgeräteinrichtungen 41, 42 und 43 und der Tabletcomputer 5 sind über Verbindungsstrecken V mit der Gatewayeinrichtung 2 verbunden. Die Verbindungsstrecke V zwischen dem Gateway 2 und dem Tabletcomputer 5 ist eine drahtlose WLAN-Verbindungsstrecke. Die Verbindungsstrecke V zwischen der Gatewayeinrichtung 2 und der Feldeinrichtung 42 ist eine drahtlose ZigBee-Verbindungsstrecke. Die Verbindungsstrecke V zwischen der Gatewayeinrichtung 2 und der dritten Feldgeräteinrichtung 43 sowie die Verbindungsstrecke zwischen der cloudbasierten Datenbankeinrichtung 3 und der Gatewayeinrichtung 2 sind jeweils drahtgebundene Ethernet-Verbindungsstrecken. Die Verbindungsstrecke V zwischen der Gatewayeinrichtung 2 und der Feldeinrichtung 41 umfasst einen drahtgebundenen ProfiBUS-Abschnitt zwischen der Feldgeräteinrichtung 41 und einem Buskoppler 7 und eine drahtlose WLAN-Verbindungsstrecke zwischen dem Buskoppler 7 und der Gatewayeinrichtung 2.

Die Netzwerkeinrichtungen 3, 41, 42, 43, 5 übermitteln Daten ausschließlich gemäß dem vorgegebenen MQTT-Protokoll durch Publizieren von Publikationsdaten PD₁ bis PD₆ und Abonnieren von Abonnementdaten AD₁ bis AD₆. Die Gatewayeinrichtung 2 übermittelt empfangene Publikationsdaten PD als Abonnementdaten AD an alle jeweiligen abonnierenden Netzwerkeinrichtungen 3, 41, 42, 43, 5. Die Abläufe beim Abonnieren, Publizieren und Übermitteln erfolgen wie beim ersten Ausführungsbeispiel gemäß Fig. 1 mittels MQTT-Nachrichten. Für eine gegebene Abonnementkennung AD_{1..6} kann mehr als ein Abonnement vorliegen, weswegen die Gatewayeinrichtung 2 beim Überführen der Publikationsdaten PD in die Abonnementdaten AD diese gegebenenfalls vervielfältigt und an mehrere abonnierende Netzwerkeinrichtungen 3, 4, 5 übermittelt. Dies ist in Fig. 2 in dem die Gatewayeinrichtung 2 darstellenden Kasten symbolisch dargestellt.

Es werden nun Abläufe beim Betrieb des Automatisierungsnetzwerks 11 aus Fig. 2 beschrieben. Der Sensor 411 der Feldgeräteinrichtung 41 erfasst Messdaten MD₁ wie beispielsweise eine Temperatur und einen Zeitstempel. Die Feldgeräteinrichtung publiziert die Messdaten MD als eine Payload, die in JSON-Notation beispielsweise "{"time": 20170103182205; "temperature": 18.2}" lautet, unter einer Messdaten-Kennung MK als Publikationskennung wie beispielsweise "/fieldDevice41/fieldData" als Publikationsdaten PD₁.

In der Gerätedatenbank 32 sind Gerätedaten gespeichert, die eine Liste aller Netzwerkeinrichtungen 3, 4, 5 des Automatisierungsnetzwerks 11 und der Publikationskennungen PK, mit denen diese jeweilige Publikationsdaten PD publizieren, umfassen. Die Datenbankeinrichtung 3 liest die Gerätedaten aus der Gerätedatenbank 32 aus und abonniert Abonnementdaten AD₁, AD₅, AD₆ mit Abonnementskennungen MK, die jeweiligen Publikationskennungen der in der Gerätedatenbank 32 hinterlegten Feldgeräten entsprechen. Somit abonniert die Datenbankeinrichtung 3 auch die Abonnementkennung MK "/fieldDevice41/fieldData", die der Publikationskennung MK entspricht, unter der die Feldgeräteinrichtung 41 die von dem Sensor 411 erfassten Messdaten MD₁ als Publikationsdaten PD₁ publiziert. Somit übermittelt die Gatewayeinrichtung 2 Abonnementdaten AD₁, die die Messdaten MD₁ aus den Publikationsdaten PD₁ umfassen, mit der Messdaten-Kennung MK als Abonnementkennung an die Datenbankeinrichtung 3. Diese speichert die Messdaten MD₁ in der Messdatenbank 31.

Die Datenbankeinrichtung 3 ermittelt daraufhin unter Verwendung der Temperatur aus den Messdaten MD₁ beispielsweise einen Sollwert für die Stellung eines nicht gezeigten Durchflussregelventils. Die Datenbankeinrichtung 3 publiziert daraufhin Steuerdaten SD, die den Sollwert umfassen, unter einer Publikationskennung SK "{"/fieldDevice42/controlData"}" als Publikationsdaten PD₂. Die zu verwendende Publikationskennung SK entnimmt die Datenbankeinrichtung 3 dabei den in der Gerätedatenbank 32 gespeicherten Gerätedaten.

Die Feldgeräteinrichtung 42 abonniert Abonnementdaten mit einer Abonnementkennung SK "{"/fieldDevice42/controlData"}", die der Publikationskennung SK entspricht, unter der die Messwertdatenbank 31 die Publikationsdaten PD₂ publiziert. Daher übermittelt die Gatewayeinrichtung 2 Abonnementdaten AD₂, die die Steuerdaten SD aus den Publikationsdaten PD₂ umfassen, mit der Steuerdaten-Kennung SK als Abonnementkennung an die Feldgeräteinrichtung 42. Die Feldgeräteinrichtung 42 transferiert den Sollwert aus den Steuerdaten SD an den Aktor 421, der das Durchflussregelventil in die spezifizierte Stellung versetzt.

Der Tabletcomputer 5 führt eine App aus, die zum Bedienen des Automatisierungsnetzwerks 11 eingerichtet ist und insbesondere mit dem MQTT-Protokoll mit Netzwerkeinrichtungen in dem Automatisierungsnetzwerk 11 kommuniziert. Das heißt, der Tabletcomputer 5 publiziert Verwaltungsanweisungen per MQTT bei dem Gateway 2, ohne über Details der Netzwerkkonfiguration der Datenbankeinrichtung 3 und/oder der Feldgeräteinrichtungen 4 Kenntnis haben zu müssen, und abonniert Mess- MD und Steuerdaten SD, Benutzerdaten BD und/oder Gerätedaten GD, ohne dass die diese Daten publizierenden Netzwerkeinrichtungen 3, 4 über Details der Netzwerkkonfiguration des Tabletcomputers 5 Kenntnis haben müssen.

Beispielsweise abonniert der Tabletcomputer 5 Abonnementdaten AD₁ mit der Messdaten-Kennung MK als Abonnementkennung. Somit übermittelt das Gateway 2 die Abonnementdaten AD₁, die die Messdaten MD₁ aus den von der Feldgeräteinrichtung 41 unter der Publikationskennung MK publizierten Publikationsdaten PD₁ enthalten, auch an den Tabletcomputer 5. Auf diese Weise wird unter Verwendung ausschließlich des MQTT-Protokolls eine Echtzeitanzeige der von dem Sensor 411 erfassten Temperaturmessdaten auf dem Display des Tabletcomputers 5 ermöglicht.

Neben den Temperaturmessdaten MD₁ werden in dem Automatisierungsnetzwerk 11 außerdem von dem Bildgeber 431 bzw. einer Kamera der Feldgeräteinrichtung 43 erfasste Bilddaten unter der Messdaten-Kennung MK als Publikationskennung als Publikationsdaten PD₆ publiziert. Allerdings erlaubt das MQTT-Protokoll in einigen Implementierungen nicht mehr als 4096 Byte an Payload-Daten. Deswegen erfolgt durch die Feldgeräteinrichtung 43 ein Codieren der Bilddaten, um diese für das Publizieren gemäß MQTT-Protokoll aufzubereiten. Insbesondere werden die Bilddaten zunächst gemäß dem JPG-Algorithmus komprimiert und anschließend in einzelne Bilddatenabschnitte von je 4092 Byte aufgeteilt. Die verbleibenden 4 Byte werden für einen Zähler benutzt, der eine laufende Nummer eines jeweiligen Bilddatenabschnitts umfasst. Anschließend publiziert die Feldgeräteinrichtung 43 nacheinander jeweils eine aus einem der Bilddatenabschnitte und einem Zähler gebildete Payload MD₂ als Publikationsdaten PD₆ unter der Messdaten-Kennung MK. Der Tabletcomputer 5, der Abonnementdaten mit der Abonnementkennung MK abonniert, bekommt die einzelnen Payloads MD₂ von der Gatewayeinrichtung 2 als Abonnementdaten AD₆ übermittelt, allerdings nicht notwendigerweise in der Reihenfolge ihres Publizierens durch die Feldgeräteinrichtung 43. Der Tabletcomputer 5 sammelt daher die in den einzelnen Payloads MD₂ umfassten Bilddatenabschnitte, ordnet sie in der Reihenfolge der in den Payloads MD₂ umfassten laufenden Nummern an, und decodiert sie anschließend gemäß dem JPG-Algorithmus zu anzeigbaren Bilddaten, und zeigt das auf diese Weise rekonstruierte Bild auf seinem Display an.

Neben der Funktionalität zur "Live"- oder Echtzeitanzeige dient der Tabletcomputer 5 auch der Verwaltung des Automatisierungsnetzwerks 11. Dazu abonniert der Tabletcomputer 5 ferner Abonnementdaten AD₃ und AD₄ mit der Gerätedaten-Kennung GK bzw. der Benutzerdaten-Kennung BK als Abonnementkennung. Somit übermittelt das Gateway 2 Gerätedaten GD aus der Gerätedatenbank 32, die in den von der Datenbankeinrichtung 3 unter der Publikationskennung GK publizierten Publikationsdaten PD₃ enthalten sind, sowie Benutzerdaten BD aus der Benutzerdatenbank 33, die in den von der Datenbankeinrichtung 3 unter der Publikationskennung BK publizierten Publikationsdaten PD₄ enthalten sind, an den Tabletcomputer 5. Auf diese Weise kann ausschließlich unter Verwendung des MQTT-Protokolls eine Anzeige von Gerätedaten und Benutzerdaten über die Geräte und die Benutzer des Automatisierungsnetzwerks 11 auf dem Display des Tabletcomputers 5 realisiert werden.

Vorteilhafterweise publiziert die Datenbankeinrichtung 3 die Publikationsdaten PD₃ und PD₄ nicht kontinuierlich, sondern nur auf Anfrage und nur nach Autorisierung eines jeweiligen Benutzers des Tabletcomputers 5. In dieser Variante generiert der Tabletcomputer 5 zunächst Verwaltunganweisungen VD₁, die einen Befehl wie "authorisationRequest", einen von einem Bediener des Tabletcomputers 5 eingegebenen Benutzernamen und ein von dem Bediener des Tabletcomputers 5 eingegebenes Passwort und ferner eine von dem Tabletcomputer 5 zufällig generierte Gerätedaten-Kennung GK und eine zufällig generierte Benutzerdaten-Kennung BK umfassen. Der Tabletcomputer 5 publiziert diese Verwaltungsanweisungen VD₁ als Payload von Publikationsdaten PD₅ unter einer vorbestimmten Verwaltungskennung VK wie "/managementRequests" bei der Gatwayeinrichtung 2. Die Datenbankeinrichtung 3 abonniert Abonnementdaten AD₅ mit der vorbestimmten Verwaltungskennung VK, und somit übermittelt das Gateway die Verwaltungsanweisungen VD₁ an die Datenbankeinrichtung 3. Die Datenbankeinrichtung 3 überprüft, ob ein Bediener mit dem in den Verwaltungsanweisungen VD₁ umfassten Benutzernamen in der Benutzerdatenbank 33 registriert ist, ob das in den Verwaltungsanweisungen VD₁ umfasste Passwort korrekt ist und auf welche Daten in den Datenbanken 31, 32, 33 der betreffende Benutzer Zugriff hat. Bei erfolgreicher Prüfung publiziert die Datenbankeinrichtung 3 Gerätedaten GD und Benutzerdaten BD als Publikationsdaten PD₃ und PD₄ unter den von dem Tabletcomputer 5 zufällig generierten Publikationskennungen GK bzw. BK. Auf diese Weise erhält der Bediener des Tabletcomputers 5 nur dann Zugriff auf die ihm zugänglichen Daten von den Benutzerdaten BD und Gerätedaten GD aus der Gerätedatenbank 32 bzw. der Benutzerdatenbank 33 der Datenbankeinrichtung 3, wenn er sich zuvor korrekt authentifiziert hat und autorisiert wurde.

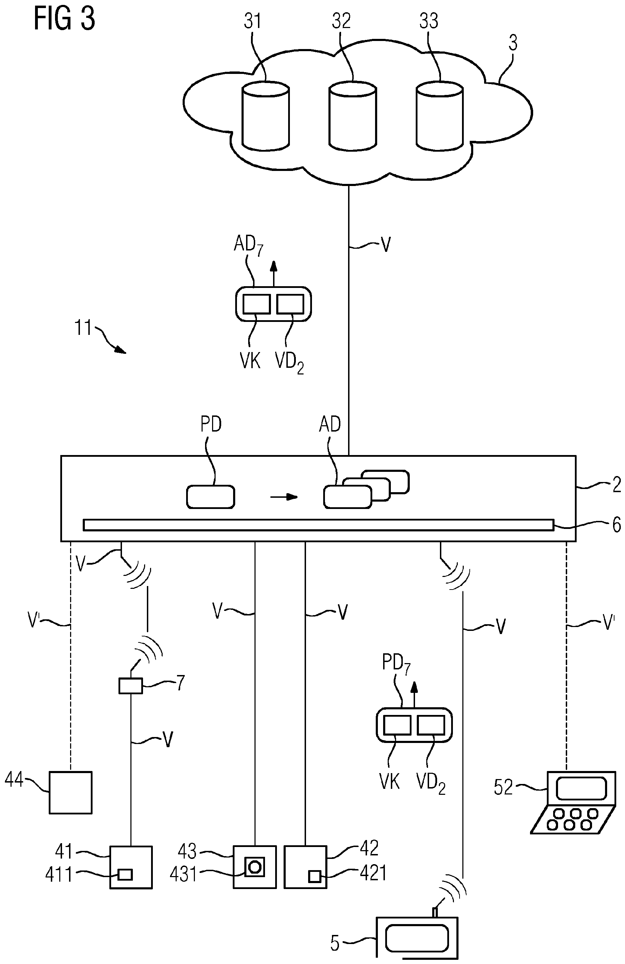

Es wird nun anhand von Fig. 3 der Fall betrachtet, dass eine weitere Feldgeräteinrichtung 44 und ein Computer 52 - ein Beispiel für eine weitere Bedienereinrichtung 5 - dem Automatisierungsnetzwerk 11 hinzugefügt werden sollen. Die Feldgeräteinrichtung 44 und der Computer 52 müssen der Datenbankeinrichtung 3 bekannt gemacht werden. Beispielsweise muss in der Gerätedatenbank 32 der Datenbankeinrichtung 3 eingetragen werden, welche Abonnements- und Publikationskennungen die Feldgeräteinrichtung 44 zum Abonnieren bzw. Publizieren von Daten nutzt, damit ein Automatisierungsalgorithmus die Feldgeräteinrichtung 44 berücksichtigen kann. Ferner müssen ein Benutzername und ein Passwort sowie Autorisierungsinformationen in der Benutzerdatenbank 33 hinterlegt werden, mit denen sich ein Benutzer des Computers 52 wie vorstehend beschrieben authentifizieren und autorisieren kann.

Der Tabletcomputer 5 erzeugt zu diesem Zweck, basierend auf Eingaben des Bedieners des Tabletcomputers 5, Verwaltungsanweisungen VD₂, die einen Befehl wie "addDevice" und die in die Gerätedatenbank 32 der Datenbankeinrichtung 3 über die Feldgeräteinrichtung 44 und den Computer 52 jeweils einzutragenden Daten sowie einen Befehl wie "addUser" und die über einen Bediener des Computers 52 in der Benutzerdatenbank 33 der Datenbankeinrichtung 3 einzutragenden Daten umfassen. Die Verwaltungsanweisungen VD₂ können ferner, wie vorstehend beschrieben, einen Befehl wie "authorisationRequest" und einen Benutzernamen und ein Passwort eines Bedieners des Tabletcomputers 5 umfassen, um die von den Verwaltungsanweisungen VD₂ umfassten Befehle gegenüber der Datenbankeinrichtung 3 zu autorisieren. Der Tabletcomputer 5 publiziert die Verwaltungsanweisungen VD₂ als Publikationsdaten PD₇ mit der vorbestimmten Verwaltungskennung VK als Publikationskennung bei der Gatewayeinrichtung 2. Wie vorstehend beschrieben übermittelt die Gatewayeinrichtung 2 die Abonnementdaten AD₇, die in diesem Fall die Verwaltungsanweisungen VD₂ umfassen, mit der Abonnementkennung VK an die Datenbankeinrichtung 3.

Die Datenbankeinrichtung 3 authentifiziert und autorisiert zunächst den Benutzernamen und das Passwort des Bedieners des Tabletcomputers 5 aus den übermittelten Verwaltungsanweisungen VD₂. Das heißt, sie prüft durch Auslesen der Benutzerdatenbank 33, ob ein entsprechender Benutzername und dasselbe Passwort eingetragen sind und ob diesem Benutzernamen Rechte zum Erteilen der in den Verwaltungsanweisungen VD₂ umfassten Befehle zugeteilt sind. Bei erfolgreicher Überprüfung werden die in den Verwaltunganweisungen VD₂ enthaltenen Befehle "addUser" und "addDevice" ausgeführt. Auf diese Weise werden die Gerätedaten in der Gerätedatenbank 32 und die Benutzerdaten in der Benutzerdatenbank 33 derart geändert, dass die Feldgeräteinrichtung 44 und der Computer 52 in der Gerätedatenbank 32 und der Bediener des Computers 52 in der Benutzerdatenbank 33 registriert sind.

Anschließend werden die in Fig. 3 gestrichelt dargestellten Verbindungsstrecken V' hergestellt, beispielsweise durch Einstecken eines Kabels oder durch Verbinden einer entsprechenden Einrichtung mit einem WLAN. Die neu hinzugefügte Feldgeräteinrichtung 44 und der Computer 52 können nun im Automatisierungsnetzwerk 11 gemäß dem MQTT-Protokoll publizierte Publikationsdaten PD als Abonnementdaten AD abonnieren und selbst Publikationsdaten PD publizieren, die die Datenbankeinrichtung 3 und weitere Netzwerkeinrichtungen 4, 5 abonnieren können.

Auf diese Weise wurde eine Verwaltungsoperation für das Automatisierungsnetzwerk 11, nämlich das Hinzufügen einer Feldgeräteinrichtung 44 und einer Bedieneinrichtung 52, ausschließlich unter Verwendung des vorgegebenen MQTT-Protokolls über die Gatewayeinrichtung 2 durchgeführt.

Obwohl die vorliegende Erfindung anhand von Ausführungsbeispielen beschrieben wurde, ist sie vielfältig modifizierbar.

Die Temperatur, die Bilddaten und der Sollwert für eine Stellung eines Durchflussventils sind lediglich Beispiele für Mess- bzw. Sollwertdaten, und das Automatisierungssystem kann beliebige andere Mess- und Sollwertdaten verwenden. Auch kann eine beliebig große Anzahl von Feldgeräteinrichtungen 4 vorgesehen sein.

Das vorstehend beschriebene Authentifizierungs- und Autorisierungsverfahren ist ebenfalls ein stark vereinfachtes Beispiel. In der Praxis können andere Authentifizierungs- und Autorisierungsverfahren eingesetzt werden, sofern die entsprechenden Kommunikationen über das vorgegebene Protokoll erfolgen. Beispielsweise könnte die Gatewayeinrichtung 2 selbst eine weitere Netzwerkeinrichtung umfassen. Bedienereinrichtungen 5 authentifizieren und autorisieren sich in dieser Variante gegenüber der Netzwerkeinrichtung der Gatewayeinrichtung 2, wobei ebenfalls das vorgegebene MQTT-Protokoll zum Einsatz kommt. Bei erfolgreicher Authentifizierung wird eine verschlüsselte VPN-Verbindung zwischen der jeweiligen Bedieneinrichtung 5 und der Gatewayeinrichtung 2 aufgebaut. Alle übrigen Publikationen und Abonnements erfolgen ausschließlich über das verschlüsselte VPN. Andere Techniken zur Gewährleistung der Sicherheit sind denkbar, solange die entsprechenden Datenübertragungen, ggf. unter vorherigem Aufbereiten bzw. Codieren der einzelnen Datenpakete, über das vorgegebene MQTT-Protokoll erfolgen.

Auch kann mehr als eine Gatewayeinrichtung vorgesehen sein, insbesondere können die mehreren Gatewayeinrichtungen in einer hierarchischen Struktur miteinander gekoppelt sein. Auf diese Weise kann die Verarbeitungslast verteilt werden, und Publikationen und Abonnements können auf einzelne Segmente des Automatisierungsnetzwerks eingeschränkt werden.

## Patentansprüche

1. Verfahren zum Betreiben eines Automatisierungsnetzwerks (1), das eine Gatewayeinrichtung (2) und mehrere Netzwerkeinrichtungen (3, 4, 5) umfasst,
bei dem von den Netzwerkeinrichtungen (3, 4, 5) ein Abonnieren von Abonnementdaten (AD₂) mit einer jeweiligen zugeordneten Abonnementkennung (AK₂) und ein Publizieren von Publikationsdaten (PD₁) unter einer jeweiligen zugeordneten Publikationskennung (PK₁) bei der Gatewayeinrichtung (2) erfolgt;
wobei durch die Gatewayeinrichtung (2) das Publizieren der Publikationsdaten (PK₁) als abonnierte Abonnementdaten (AD₁) unter einer jeweiligen Abonnementkennung (AK₁), die der jeweiligen Publikationskennung (PK₁) der Publikationsdaten (PD₁) entspricht, derart erfolgt, dass allen Netzwerkeinrichtungen (3, 4, 5), welche Abonnementdaten (AD₁) mit derselben Abonnementkennung (AK₁) wie die jeweilige Publikationskennung (PK₁) abonnieren, die abonnierten Abonnementdaten (AD₁) mit der Abonnementkennung (AK₁) übermittelt werden;
wobei die Netzwerkeinrichtungen (3, 4, 5) umfassen: eine Feldgeräteinrichtung (4), welche Mess- (MD) und/oder Steuerdaten (SD) abonniert, erfasst und/oder publiziert,
**dadurch gekennzeichnet,**
**dass** die Netzwerkeinrichtungen (3, 4, 5) ferner eine Datenbankeinrichtung (3) umfassen, welche die Mess- (MD) und/oder Steuerdaten (SD) der Feldgeräteinrichtung (4), Gerätedaten (GD) über in dem Automatisierungsnetzwerk (1) vorliegende Netzwerkeinrichtungen (3, 4, 5) und Benutzerdaten (BD) über Benutzer der Netzwerkeinrichtungen (3, 4, 5) abonniert, speichert, bereitstellt und/oder publiziert;
wobei das Übermitteln von Daten (MD, SD, BD, GD) zwischen den Netzwerkeinrichtungen (3, 4, 5) nach einem einzigen vorgegebenen Protokoll, ausschließlich durch Abonnieren und Publizieren über die Gatewayeinrichtung (2), erfolgt.

2. Verfahren nach Anspruch 1,
**dadurch gekennzeichnet,**
**dass** das vorgegebene Protokoll das Message-Queue-Telemetry-Transport-Protokoll/MQTT-Protokoll ist, eine jeweilige Abonnementkennung und eine jeweilige Publikationskennung jeweils ein jeweiliges MQTT-Topic ist und die Gatewayeinrichtung (2) einen MQTT-Broker implementiert.

3. Verfahren nach Anspruch 1 oder 2,
**dadurch gekennzeichnet,**
**dass** ein Übertragen bei einem jeweiligen Abonnieren und/oder Publizieren über eine jeweilige TCP-Verbindungsstrecke erfolgt und das vorgegebene Protokoll das MQTT-Protokoll ist und/oder
**dass** ein Übertragen bei einem jeweiligen Abonnieren und/oder Publizieren über eine jeweilige UDP-, ZigBee- oder TinyOS-Verbindungsstrecke erfolgt und das vorgegebene Protokoll das MQTT-SN-Protokoll ist.

4. Verfahren nach einem der Ansprüche 1 bis 3,
**dadurch gekennzeichnet,**
**dass** Datenübertragungen zwischen den Netzwerkeinrichtungen (3, 4, 5) und/oder Anfragen an die Gatewayeinrichtung (2), die nicht dem vorgegebenen Protokoll entsprechen, deaktiviert und/oder blockiert werden.

5. Verfahren nach einem der Ansprüche 1 bis 4, dad
urch gekennzeichnet,
dass die Feldgeräteinrichtung (4) Messdaten (MD) erfasst und als Publikationsdaten (PD₁) mit einer Messdaten-Kennung (MK) als Publikationskennung publiziert,
die Datenbankeinrichtung (3) als Abonnementdaten (AD₁) die Messdaten (MD) mit der Messdaten-Kennung (MK) als Abonnementkennung abonniert,
die Datenbankeinrichtung (3) in Abhängigkeit von den abonnierten Messdaten (MD) und/oder von den in der Datenbankeinrichtung (3) gespeicherten Gerätedaten (GD) Steuerdaten (SD) für die Feldgeräteinrichtung (4) generiert und als Publikationsdaten (PD₂) mit der Steuerdaten-Kennung (SK) als Publikationskennung publiziert,
die Feldgeräteinrichtung (4) als Abonnementdaten (AD₂) die Steuerdaten (SD) mit der Steuerdaten-Kennung (SK) als Abonnementkennung abonniert und
die Feldgeräteinrichtung (4) in Abhängigkeit von den abonnierten Steuerdaten (SD) eine Automatisierungsaufgabe durchführt.

6. Verfahren nach Anspruch 1 bis 5,
**dadurch gekennzeichnet,**
**dass** die Netzwerkeinrichtungen (3, 4, 5) ferner eine Bedieneinrichtung (5) umfassen, welche abonnierte Daten (GD, SD, MD, BD) anzeigt und/oder Verwaltungsanweisungen (VD) erfasst und publiziert, wobei die Verwaltungsanweisungen (VD) um Anweisungen eines Bedieners sind, welche die Datenbankeinrichtung (3) dazu veranlassen, die in der Datenbankeinrichtung (3) gespeicherten Daten (MD, SD, GD, BD) zu verändern.

7. Verfahren nach einem der Anspruch 6,
**dadurch gekennzeichnet, dass**
die Bedieneinrichtung (5) ein Tabletcomputer, ein Smartphone, ein tragbarer Computer oder ein stationärer Computer ist.

8. Verfahren nach einem der Ansprüche 6 oder 7,
**dadurch gekennzeichnet**,
die Feldgeräteinrichtung (4) Messdaten (MD) erfasst und als Publikationsdaten mit einer Messdaten-Kennung (MK) als Publikationskennung publiziert,
dass die Bedieneinrichtung (5) die Messdaten (MD) mit der Messdaten-Kennung (MK) als Abonnementkennung als Abonnementdaten (AD₁, AD₆) abonniert,
die Bedieneinrichtung (5) die abonnierten Messdaten (MD) anzeigt.

9. Verfahren nach einem der Ansprüche 6 bis 8
und/oder
dass die Datenbankeinrichtung die Gerätedaten (GD) mit einer Gerätedaten-Kennung (GK) als Publikationskennung publiziert und/oder die Benutzerdaten (BD) mit einer Benutzerdaten-Kennung (BD) als Publikationskennung publiziert, und
die Bedieneinrichtung (5) die Gerätedaten (GD) mit der Gerätedaten-Kennung (GK) als Abonnementkennung als Abonnementdaten (AD₃) abonniert und/oder die Benutzerdaten (BD) mit der Benutzerdaten-Kennung (BD) als Abonnementkennung als Abonnementdaten (AD₄) abonniert, und
die Bedieneinrichtung (5) die abonnierten Gerätedaten (GD) und/oder die abonnierten Benutzerdaten (BD) anzeigt.

10. Verfahren nach einem der Ansprüche 1 bis 9,
**dadurch gekennzeichnet,**
**dass** zum Publizieren vorgesehene Daten (MD, SD, GD, BD, VD) durch eine jeweilige Netzwerkeinrichtung (3, 4, 5) in Publikationsdaten (PD_{1...4}) in einem Datenformat des vorgegebenen Protokolls codiert werden und abonnierte Abonnementdaten (AD_{1...4}) in dem Datenformat des vorgegebenen Protokolls von einer jeweiligen abonnierenden Netzwerkeinrichtung (3, 4, 5) empfangen werden.

11. Verfahren nach Anspruch 10,
**dadurch gekennzeichnet,**
**dass** das Codieren der zum Publizieren vorgesehenen Daten in ein Datenformat des vorgegebenen Protokolls ein Aufteilen der zum Publizieren vorgesehen Daten auf mehrere MQTT-Rahmen umfasst.

12. Automatisierungsnetzwerk (1), das eine Gatewayeinrichtung (2) und mehrere Netzwerkeinrichtungen (3, 4) umfasst,
wobei die Netzwerkeinrichtungen (3, 4, 5) zum Abonnieren von Abonnementdaten (AD₂) mit einer jeweiligen zugeordneten Abonnementkennung (AK₂) und zum Publizieren von Publikationsdaten (PD₁) unter einer jeweiligen zugeordneten Publikationskennung (PK₁) bei der Gatewayeinrichtung (2) eingerichtet sind;
wobei die Gatewayeinrichtung (2) eingerichtet ist zum Publizieren der Publikationsdaten (PK₁) als abonnierte Abonnementdaten (AD₁) unter einer jeweiligen Abonnementkennung (AK₁), die der jeweiligen Publikationskennung (PK₁) der Publikationsdaten (PD₁) entspricht, derart, dass allen Netzwerkeinrichtungen (3, 4, 5), welche Abonnementdaten (AD₁) mit derselben Abonnementkennung (AK₁) wie die jeweilige Publikationskennung (PK₁) abonnieren, die abonnierten Abonnementdaten (AD₁) mit der Abonnementkennung (AK₁) übermittelt werden;
wobei die Netzwerkeinrichtungen (3, 4, 5) umfassen: eine Feldgeräteinrichtung (4), welche zum Abonnieren, Erfassen und/oder Publizieren von Mess- (MD) und/oder Steuerdaten (SD) eingerichtet ist,
**dadurch gekennzeichnet, dass**
die Netzwerkeinrichtungen (3, 4, 5) ferner eine Datenbankeinrichtung (3) umfassen, welche zum Abonnieren, Speichern, Bereitstellen und/oder Publizieren der Mess- (MD) und/oder Steuerdaten (SD) der Feldgeräteinrichtung (4), von Gerätedaten (GD) über in dem Automatisierungsnetzwerk (1) vorliegende Netzwerkeinrichtungen (3, 4, 5) und von Benutzerdaten (BD) über Benutzer der Netzwerkeinrichtungen (3, 4, 5) eingerichtet ist;
wobei die jeweiligen Netzwerkeinrichtungen (3, 4, 5) jeweils zum Übermitteln von Daten (MD, SD, BD, GD) an und von andere Netzwerkeinrichtungen (3, 4, 5) nach einem einzigen vorgegebenen Protokoll, ausschließlich durch Abonnieren und Publizieren über die Gatewayeinrichtung (2), eingerichtet sind.

13. Automatisierungsnetzwerk nach Anspruch 12, das zum Durchführen eines Verfahrens nach einem der Ansprüche 1 bis 11 eingerichtet ist.

14. Computerprogrammprodukt, das auf mindestens einer programmgesteuerten Einrichtung die Durchführung eines Verfahrens nach einem der Ansprüche 1 bis 11 veranlasst.

## Claims

1. Method for operating an automation network (1), comprising a gateway device (2) and a plurality of network devices (3, 4, 5),
wherein the network devices (3, 4, 5) subscribe to subscription data (AD₂) by means of a respective associated subscription identifier (AK₂) and publish publication data (PD₁) on the gateway device (2) under a respective associated publication identifier (PK₁);
wherein the gateway device (2) publishes the publication data (PK₁) as subscribed subscription data (AD₁) under a respective subscription identifier (AK₁), which corresponds to the respective publication identifier (PK₁) of the publication data (PD₁), in such a way that to all network devices (3, 4, 5) which subscribe to subscription data (AD₁) with the same subscription identifier (AK₁) as the respective publication identifier (PK₁), the subscribed subscription data (AD₁) are transmitted with the subscription identifier (AK₁);
wherein the network devices (3, 4, 5) comprise: a field device unit (4) which subscribes to, collects and/or publishes measurement data (MD) and/or control data (SD),
**characterized**
**in that** the network devices (3, 4, 5) further comprise a database device (3) which subscribes to, stores, provides and/or publishes the measurement data (MD) and/or control data (SD) of the field device unit (4), device data (GD) about network devices (3, 4, 5) present in the automation network (1), and user data (BD) about users of the network devices (3, 4, 5);
wherein the transmission of data (MD, SD, BD, GD) between the network devices (3, 4, 5) takes place according to a single specified protocol, exclusively by subscribing and publishing via the gateway device (2).

2. Method according to Claim 1,
**characterized in that**
the specified protocol is the message-queue telemetry transport protocol/MQTT protocol, a respective subscription identifier and a relevant publication identifier are each an MQTT topic, and the gateway device (2) implements an MQTT broker.

3. Method according to Claim 1 or 2,
**characterized in that**
transmission during a respective subscription and/or publishing operation takes place via a respective TCP connection path and the specified protocol is the MQTT protocol and/or
that transmission during a respective subscription and/or publishing operation takes place via a respective UDP, ZigBee or TinyOS connection path and the specified protocol is the MQTT-SN protocol.

4. Method according to any one of Claims 1 to 3,
**characterized in that**
data transfers between the network devices (3, 4, 5) and/or requests to the gateway device (2) which do not comply with the specified protocol are disabled and/or blocked.

5. Method according to any one of Claims 1 to 4,
**characterized in that**
the field device unit (4) collects measurement data (MD) and publishes said data as publication data (PD₁) with a measurement data identifier (MK) as a publication identifier, as subscription data (AD₁) the database device (3) subscribes to the measurement data (MD) with the measurement data identifier (MK) as a subscription identifier,
the database device (3), in accordance with the subscribed measurement data (MD) and/or the device data (GD) stored in the database device (3), generates control data (SD) for the field device unit (4) and publishes said control data as publication data (PD₂) with the control data identifier (SK) as publication identifier,
as subscription data (AD₂) the field device unit (4) subscribes to the control data (SD) with the control data identifier (SK) as a subscription identifier and
the field device unit (4) performs an automation task in accordance with the subscribed control data (SD).

6. Method according to Claims 1 to 5,
**characterized in that**
the network devices (3, 4, 5) also comprise an operating device (5), which displays subscribed data (GD, SD, MD, BD) and/or collects and publishes management instructions (VD), wherein the management instructions (VD) are instructions of an operator, which cause the database device (3) to modify the data (MD, SD, GD, BD) stored in the database device (3).

7. Method according to one of Claim 6,
**characterized in that**
the operating device (5) is a tablet computer, a smartphone, a portable computer or a static computer.

8. Method according to either of Claims 6 and 7,
**characterized in that**
the field device unit (4) collects measurement data (MD) and publishes said data as publication data with a measurement data identifier (MK) as a publication identifier,
the operating device (5) subscribes to the measurement data (MD) with the measurement data identifier (MK) as a subscription identifier as subscription data (AD₁, AD₆),
the operating device (5) displays the subscribed measurement data (MD).

9. Method according to one of Claims 6 to 8,
and/or
that the database device publishes the device data (GD) with a device data identifier (GK) as a publication identifier and/or publishes the user data (BD) with a user data identifier (BD) as a publication identifier, and
the operating device (5) subscribes to the device data (GD) with the device data identifier (GK) as a subscription identifier as subscription data (AD₃) and/or subscribes to the user data (BD) with the user data identifier (BD) as a subscription identifier as subscription data (AD₄), and
the operating device (5) displays the subscribed device data (GD) and/or the subscribed user data (BD).

10. Method according to any one of Claims 1 to 9,
**characterized in that**
data (MD, SD, GD, BD, VD) intended for publishing are encoded in publication data (PD_{1...4}) in a data format of the specified protocol by a respective network device (3, 4, 5) and subscribed subscription data (AD_{1...4}) in the data format of the specified protocol are received by a respective subscribing network device (3, 4, 5).

11. Method according to Claim 10,
**characterized in that**
the encoding of the data intended for publishing into a data format of the specified protocol comprises splitting the data intended for publishing over a plurality of MQTT frames.

12. Automation network (1), which comprises a gateway device (2) and a plurality of network devices (3, 4),
wherein the network devices (3, 4, 5) are configured for subscribing to subscription data (AD₂) with a respective associated subscription identifier (AK₂) and for publishing publication data (PD₁) on the gateway device (2) under a respective associated publication identifier (PK₁);
wherein the gateway device (2) is configured for publishing the publication data (PK₁) as subscribed subscription data (AD₁) under a respective subscription identifier (AK₁), which corresponds to the respective publication identifier (PK₁) of the publication data (PD₁), in such a way that to all network devices (3, 4, 5), which subscribe to subscription data (AD₁) with the same subscription identifier (AK₁) as the respective publication identifier (PK₁), the subscribed subscription data (AD₁) are transmitted with the subscription identifier (AK₁); wherein the network devices (3, 4, 5) comprise: a field device unit (4) which is configured to subscribe to, collect and/or publish measurement data (MD) and/or control data (SD), **characterized in that**
the network devices (3, 4, 5) further comprise a database device (3) which is configured for subscribing to, storing, providing and/or publishing the measurement data (MD) and/or control data (SD) of the field device unit (4), device data (GD) about network devices (3, 4, 5) present in the automation network (1), and user data (BD) about users of the network devices (3, 4, 5);
wherein the respective network devices (3, 4, 5) are each configured for transferring data (MD, SD, BD, GD) to and from other network devices (3, 4, 5) according to a single specified protocol, exclusively by subscribing and publishing via the gateway device (2).

13. Automation network according to Claim 12, which is configured for carrying out a method according to any one of Claims 1 to 11.

14. Computer program product, which causes the execution of a method according to any one of Claims 1 to 11 on at least one program-controlled device.

## Revendications

1. Procédé pour faire fonctionner un réseau (1) d'automatisation, qui comprend un dispositif (2) de gateway et plusieurs dispositifs (3, 4, 5) de réseau,
dans lequel il s'effectue, par les dispositifs (3, 4, 5) de réseau, une mise en abonnement de données (AD₂) d'abonnement, ayant une caractéristique (AK₂) d'abonnement respective associée et une publication de données (PD₁) de publication sous une caractérisation (PK₁) de publication respective associée au dispositif (2) de gateway ;
dans lequel il s'effectue, par le dispositif (2) de gateway, la publication des données (PK₁) de publication sous la forme de données (AD₁) d'abonnement mis en abonnement, sous une caractérisation (AK₁) respective d'abonnement, qui correspond à la caractérisation (PK₁) respective de publication des données (PD₁) de publication, de manière à transmettre à tous les dispositifs (3, 4, 5) de réseau, qui abonnent des données (AD₁) d'abonnement ayant la même caractérisation (AK₁) d'abonnement que la caractéristique (PK₁) respective de publication, les données (AD₁) d'abonnement mis en abonnement ayant la caractéristique (AK₁) d'abonnement ;
dans lequel les dispositifs (3, 4, 5) de réseau comprennent un dispositif (4) d'appareil sur site, qui met en abonnement, relève et/ou publie des données (MD) de mesure et/ou des données (SD) de commande,
**caractérisé**
**en ce que** les dispositifs (3, 4, 5) de réseau comprennent, en outre, un dispositif (3) de base de données, qui met en abonnement, met en mémoire, met à disposition et/ou publie les données (MD) de mesure et/ou les données (SD) de commande du dispositif (4) d'appareil sur site, des données (GD) d'appareil sur des dispositifs (3, 4, 5) de réseau présents dans le réseau (1) d'automatisation et des données (BD) d'utilisateur sur des utilisateurs des dispositifs (3, 4, 5) de réseau ;
dans lequel la transmission de données (MD, SD, BD, GD) entre les dispositifs (3, 4, 5) de réseau s'effectue suivant un protocole unique donné à l'avance, exclusivement par mise en abonnement et publication par l'intermédiaire du dispositif (2) de gateway.

2. Procédé suivant la revendication 1,
**caractérisé**
**en ce que** le protocole donné à l'avance est le protocole message-queue-telemetry-transport/ protocole MQTT, une caractérisation respective d'abonnement et une caractérisation respective de publication sont, respectivement, un topic MQTT respectif et le dispositif (2) de gateway met un œuvre un broker MQTT.

3. Procédé suivant la revendication 1 ou 2,
**caractérisé**
**en ce qu'**une transmission s'effectue pour une mise en abonnement et/ou une publication respective, par une section de liaison TCP respective et le protocole donné à l'avance est le protocole MQTT et/ou
**en ce qu'**une transmission, lors d'une mise en abonnement et/ou d'une publication respective, s'effectue par une section de liaison respective UDP, Zigbee ou TinyOS et le protocole donné à l'avance est le protocole MQTT-SN.

4. Procédé suivant l'une des revendications 1 à 3,
**caractérisé**
**en ce que** l'on désactive et/ou on bloque des transmissions de données entre les dispositifs (3, 4, 5) de réseau et/ou des demandes au dispositif (2) de gateway, qui ne correspondent pas au protocole donné à l'avance.

5. Procédé suivant l'une des revendications 1 à 4,
**caractérisé**
**en ce que** le dispositif (4) d'appareil sur site relève des données (MD) de mesure et les publie comme données (PD₁) de publication ayant une caractérisation (MK) de données de mesure comme caractérisation de publication,
le dispositif (3) de base de données met en abonnement, comme données (AD₁) d'abonnement, les données (MD) de mesure ayant la caractérisation (MK) de données de mesure comme caractérisation d'abonnement,
le dispositif (3) de base de données produit, en fonction des données (MD) de mesure mises en abonnement et/ou des données (GD) d'appareil mises en mémoire dans le dispositif (3) de base de données, des données (SD) de commande du dispositif (4) d'appareil sur site et les publie, comme données (PD₂) de publication ayant la caractérisation (SK) de données de commande comme caractérisation de publication,
le dispositif (4) d'appareil sur site met en abonnement, comme données (AD₂) d'abonnement, les données (SD) de commande ayant la caractérisation (SK) de données de commande comme caractérisation d'abonnement et
le dispositif (4) d'appareil sur site effectue une tache d'automatisation en fonction des données (SD) de commande mises en abonnement.

6. Procédé suivant la revendication 1 à 5,
**caractérisé**
**en ce que** les dispositifs (3, 4, 5) de réseau comprennent, en outre, un dispositif (5) de service, qui indique les données (GD, SD, MD, BD) mises en abonnement et/ou détecte des instructions (VD) de gestion et les publie, les instructions (VD) de gestion étant des instructions d'un opérateur, qui font que le dispositif (3) de base de données modifie les données (MD, SD, GD, BD) mises en mémoire dans le dispositif (3) de base de données.

7. Procédé suivant l'une des revendications 6,
**caractérisé**
**en ce que** le dispositif (5) de service est un ordinateur à tablette, un téléphone intelligent, un ordinateur portatif ou un ordinateur fixe.

8. Procédé suivant l'une des revendications 6 ou 7,
**caractérisé**
**en ce que** le dispositif (4) d'appareil sur site relève des données (MD) de mesure et les publie, comme données de publication ayant une caractéristique (MK) de données de mesure comme caractérisation de publication,
**en ce que** le dispositif (5) de service met en abonnement, comme données (AD₁, AD₆) d'abonnement, les données (MD) de mesure ayant la caractérisation (MK) de données de mesure comme caractérisation d'abonnement,
le dispositif (5) de service indique les données (MD) de mesure mises en abonnement.

9. Procédé suivant l'une des revendications 6 à 8 et/ou
en ce que le dispositif de base de données publie les données (GD) d'appareil ayant une caractérisation (GK) de données d'appareil comme caractérisation de publication et/ou publie les données (BD) d'utilisateur ayant une caractérisation (BD) de données d'utilisateur comme caractérisation de publication, et
le dispositif (5) de service met en abonnement, comme données (AD₃) d'abonnement, les données (GD) d'appareil ayant la caractérisation (GK) de données d'appareil comme caractérisation d'abonnement et/ou met en abonnement, comme données (AD₄) d'abonnement, les données (BD) d'utilisateur ayant la caractérisation (BD) de données d'utilisateur comme caractérisation d'abonnement, et
le dispositif (5) de service indique les données (GD) d'appareil mises en abonnement et/ou les données (BD) d'utilisateur mises en abonnement.

10. Procédé suivant l'une des revendications 1 à 9,
**caractérisé**
**en ce que** l'on code en données (PD_{1...4}) de publication dans un format de données du protocole donné à l'avance, des données (MD, SD, GD, BD, VD) ? prévues pour la publication, par un dispositif (3, 4, 5) respectif de réseau et des données (AD_{1...4}) d'abonnement mises en abonnement sont reçues ? dans le format de données du protocole donné à l'avance, par un dispositif (3, 4, 5) de réseau respectif d'abonnement.

11. Procédé suivant la revendication 10,
**caractérisé**
**en ce que** le codage des données prévues pour la publication, dans un format de données du protocole donné à l'avance, comprend une subdivision des données prévues pour la publication sur plusieurs trames MQTT.

12. Réseau (1) d'automatisation, qui comprend un dispositif (2) de gateway et plusieurs dispositifs (3, 4) de réseau,
dans lequel les dispositifs (3, 4, 5) de réseau sont conçus pour la mise en abonnement de données (AD₂) d'abonnement ayant une caractérisation (AK₂) d'abonnement respective associée, et pour la publication de données (PD₁) de publication, sous une caractérisation (PK₁) de publication respective associée dans le dispositif (2) de gateway ;
dans lequel le dispositif (2) de gateway est conçu pour la publication des données (PK₁) de publication, comme données (AD₁) d'abonnement mises en abonnement, sous une caractérisation (AK₁) respective d'abonnement, qui correspond à la caractérisation (PK₁) respective de publication des données (PD₁) de publication, de manière à transmettre, à tous les dispositifs (3, 4, 5) de réseau, qui mettent en abonnement des données (AD₁) d'abonnement ayant la même caractérisation (AK₁) d'abonnement que la caractérisation (PK₁) respective de publication, les données (AD₁) d'abonnement mises en abonnement ayant la caractérisation (AK₁) d'abonnement ;
dans lequel les dispositifs (3, 4, 5) de réseau comprennent un dispositif (4) d'appareil sur site, qui est conçu pour la mise en abonnement, le relevé et/ou la publication de données (MD) de mesure et/ou de données (SD) de commande,
**caractérisé en ce que**
les dispositifs (3, 4, 5) de réseau comprennent, en outre, un dispositif (3) de base de données, qui est conçu pour la mise en abonnement, la mise en mémoire, la mise à disposition et/ou la publication des données (MD) de mesure et/ou des données (SD) de commande du dispositif (4) d'appareil sur site, de données (GD) d'appareil sur des dispositifs (3, 4, 5) d'appareil présents dans le réseau (1) d'automatisation et de données (BD) d'utilisateur sur l'utilisateur des dispositifs (3, 4, 5) de réseau ;
dans lequel les dispositifs (3, 4, 5) respectifs de réseau sont conçus chacun pour la transmission de données (MD, SD, BD, GD) à et d'autres dispositifs (3, 4, 5) de réseau suivant un protocole unique donné à l'avance, exclusivement par mise en abonnement et publication par l'intermédiaire du dispositif (2) de gateway.

13. Réseau d'automatisation suivant la revendication 12, qui est conçu pour effectuer un procédé suivant l'une des revendications 1 à 11.

14. Produit de programme d'ordinateur, qui, sur au moins un dispositif commandé par programme provoque la mise en œuvre d'un procédé suivant l'une des revendications 1 à 11.
